(19) Europäisches Patentamt

European Patent Office

Office européen des brevets

(11) **EP 1 876 382 A1**

(12) **DEMANDE DE BREVET EUROPEEN**

(43) Date de publication:
**09.01.2008 Bulletin 2008/02**

(51) Int Cl.:
*F16L 59/02* (2006.01)      *B64G 1/40* (2006.01)
*F17C 13/00* (2006.01)      *C09J 163/00* (2006.01)
*C09J 5/02* (2006.01)

(21) Numéro de dépôt: **07111371.6**

(22) Date de dépôt: **29.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **03.07.2006 FR 0652781**

(71) Demandeur: **Cryospace l'air liquide aerospatiale 78130 Les Mureaux (FR)**

(72) Inventeurs:
• **Cargnello, Rémo**
  **78130, Les Mureaux (FR)**
• **Marion, Yaël**
  **78210, Saint Cyr L'ècole (FR)**

(74) Mandataire: **Poulin, Gérard**
  **Société BREVATOME**
  **3, rue du Docteur Lancereaux**
  **75008 Paris (FR)**

(54) **Primaire d'accrochage pour tenue cryogénique et son utilisation**

(57)    L'invention concerne l'utilisation d'une composition comprenant un liant en solution dans un solvant et un cosolvant, pour fournir, après application et séchage, un primaire d'accrochage résistant à des températures cryogéniques, le cosolvant ayant pour effet d'abaisser la tension superficielle du primaire d'accrochage lors de son application.

    Application notamment dans les industries aéronautiques et spatiales.

**Description**

**DOMAINE TECHNIQUE**

La présente invention se rapporte à un primaire d'accrochage résistant à des températures cryogéniques ainsi qu'à son utilisation.

Plus précisément, elle se rapporte à une composition utile pour la réalisation d'isolations de structures cryogéniques, comme les réservoirs, à l'aide de revêtements de protection thermique qu'ils soient collés ou bien projetés sur le substrat destiné à être protégé.

Ce primaire est plus spécialement destiné à être appliqué sur les alliages d'aluminium largement utilisés dans les industries aéronautiques et spatiales, et notamment des lanceurs, pour garantir une adhérence suffisante des protections thermiques froides montées sur les réservoirs contenant de l'oxygène ou de l'hydrogène liquide. Toutefois, il peut également être employé dans tout autre secteur industriel dans lequel on conçoit des équipements cryotechniques.

**ÉTAT DE LA TECHNIQUE ANTÉRIEURE**

L'utilisation d'un primaire d'accrochage sur un subjectile permet d'obtenir un film ou feuil adhérent et résistant, jouant un rôle important sur l'aptitude d'un collage. De plus, l'utilisation d'un primaire est indispensable dans certains procédés de fabrication. C'est précisément le cas lorsque l'on fabrique des réservoirs cryotechniques. En effet, ces réservoirs cryotechniques doivent être isolés thermiquement puisqu'ils contiennent soit de l'oxygène liquide (température à 90 K) soit de l'hydrogène liquide (température à 20 K).

Ainsi, on isole l'extérieur des réservoirs en collant des panneaux en mousse rigide à cellules fermées à l'aide d'un adhésif apte à supporter les températures cryogéniques sans perdre son intégrité. A titre indicatif, ce sont par exemple des mousses en polychlorure de vinyle, des mousses de polyuréthanne chargées ou non de verre, des mousses en polyisocyanurate, des mousses polystyréniques ou des mousses phénoliques. Les épaisseurs de ces panneaux sont avantageusement comprises entre 15 mm et 20 mm.

Pour cela et dans un premier temps, on prépare la surface métallique que l'on désire protéger thermiquement. Cette préparation de surface a pour objet de donner à ladite surface une tension superficielle suffisante pour assurer une adhérence optimale du primaire d'accrochage. Elle peut prendre différentes formes bien connues de l'homme du métier. Elle consiste généralement en une opération de dégraissage alcalin et en une opération de décapage sulfochromique pour les alliages d'aluminium, suivies d'un rinçage à l'eau déminéralisée ou d'un émerisage à l'aide d'un papier abrasif de grade fin, ou encore de sablage au corindon de faible granulométrie, pour éviter de dégrader la structure métallique. Dans un délai aussi court que possible (généralement moins de 8 heures) afin d'éviter une nouvelle pollution de la surface, l'étape de préparation de ladite surface est suivie d'une opération de projection d'un primaire d'accrochage. Cette opération améliore l'adhérence de l'adhésif utilisé ensuite pour fixer l'isolation et protège la structure contre la corrosion.

Le primaire est avantageusement un époxy choisi principalement pour conserver ses propriétés jusqu'à une température cryogénique d'environ 20 K. Un kilogramme de primaire peut être formulé de la façon suivante :

- Résine PZ 820 (fournisseur SODIEMA) : 280 g $\pm$ 2 g
- Toluène (fournisseur PROLABO) : 292 g $\pm$ 2 g
- Xylène (fournisseur PROLABO): 143 g $\pm$ 2 g
- Ether monoéthylique de l'éthylèneglycol (fournisseur PROLABO): 90 g $\pm$ 2 g
- Durcisseur HZ820 (fournisseur SODIEMA): 196 g $\pm$ 2 g.

Afin d'éviter toute pollution de la surface ainsi protégée, celle-ci doit être isolée dans un délai maximum de 30 jours après la polymérisation du primaire et au moins 36 heures après la fin de sa projection. Un ravivage du primaire à l'alcool dénaturé au minimum 12 heures avant l'opération de collage de la protection thermique permet de dépasser ce délai de 12 jours environ. L'épaisseur du film est avantageusement comprise entre 10 $\mu$m et 50 $\mu$m, sachant que son épaisseur optimale est d'environ 20 $\mu$m.

On colle ensuite sur la surface ainsi préparée et revêtue du primaire les panneaux aux emplacements préalablement définis avec un adhésif apte à supporter les températures cryogéniques sans perdre son intégrité. Cet adhésif doit en outre être compatible avec les matériaux dont il assure le collage.

Afin de satisfaire simultanément toutes ces conditions, le film d'adhésif est réalisé au moyen d'une colle de la famille des époxydes telle que la colle Araldite® AY103/HY953F distribué par la société VANTICO. Ainsi cet adhésif adhère à la structure à température ambiante ainsi qu'aux températures cryogéniques tout en étant chimiquement compatible avec la protection thermique. L'application de l'adhésif s'effectue à l'aide d'un tissu de verre imprégné de colle, de préférence à l'aide de rouleaux, puis bobiné directement sur le réservoir. La masse du tissu de verre est avantageusement comprise entre 30 g/m$^2$ et 40 g/m$^2$ et sa largeur est d'environ un mètre pour une facilité de mise en oeuvre. La masse de colle à déposer est avantageusement comprise entre 150 g/m$^2$ et 200 g/m$^2$. Cependant, il est préférable de s'approcher le plus possible des 150 g/m$^2$ car le système ne doit pas être trop pénalisant en terme de masse. Après avoir posé les panneaux sur la structure, on les maintient ensuite sous une dépression de 0,7 bar à l'aide d'un sac à vide pendant une durée d'environ 36 heures, temps nécessaire à la colle pour polymériser.

Après cette polymérisation, on dépose le sac à vide pour s'assurer du bon collage des panneaux ainsi que de la présence de colle au niveau des joints inter-panneaux. Un joint sans colle pourrait conduire à un phénomène de cryopompage de l'air lors de la mise en froid du réservoir, pouvant éventuellement endommager l'isolation. Le jeu toléré entre chaque panneau doit être aux alentours d'un millimètre. A la température de 20 K, la colle garantit une tenue en cisaillement supérieure à 10 MPa, ce qui est conservatif par rapport à la valeur de contrainte du matériau isolant.

L'isolation ainsi réalisée permet les mouvements de la peau du réservoir dus aux efforts hyperstatiques (contractions thermiques et pressurisation des réservoirs) pendant la phase de remplissage au sol, ainsi qu'aux efforts généraux supportés par le lanceur en vol.

Actuellement, ce primaire de collage a été appliqué avec succès sur le programme Ariane pour satisfaire les exigences liées aux réservoirs cryotechniques, notamment aux caractéristiques de tenue en froid jusqu'à la température de l'hydrogène liquide (20 K).

Le primaire a pour rôle principal d'améliorer l'adhésion des collages effectués sur l'aluminium 2219 ou 6061 utilisé pour la fabrication du réservoir cryotechnique d'Ariane 5 et de ses équipements. Le primaire, formé d'un composé chimique en dispersion dans un solvant, est appliqué en une couche aussi mince que possible, sur le substrat préalablement traité afin d'éliminer complètement l'huile, la graisse, la poussière ou autres impuretés résiduelles. Les joints collés sont d'autant plus résistants que les surfaces ont été bien nettoyées et traitées en créant une nouvelle surface active par l'application d'un primaire.

Après pose du primaire, le solvant porteur s'évapore et laisse en place le produit réactif. Celui-ci améliore l'aptitude au collage du substrat en créant un pont chimique entre celui-ci et l'adhésif. Ce primaire comporte donc d'une part des groupements chimiques qui réagissent de préférence avec la surface, et d'autre part des radicaux qui ont une grande affinité avec l'adhésif.

Un autre besoin est justifié par la présence du primaire : c'est lorsque son application s'effectue principalement sur le réservoir nu après son passage dans un tunnel ayant pour mission de le dégraisser, décaper, rincer et sécher. Cette application apporte en plus, à une bonne préparation de surface, une souplesse de fabrication dans le cycle de production en autorisant des délais plus longs entre le traitement de surface du réservoir nu et son isolation. Le temps alloué, pour utiliser un substrat nettoyé, est dans les règles de l'art inférieur à seize heures. L'application du primaire dans ce délai permet de disposer du réservoir pendant une période d'environ trente jours, après la polymérisation du primaire, avant de l'isoler. Plus précisément, sans avoir recours à l'application de ce primaire, il serait pratiquement impossible d'isoler le réservoir nu étant donné le temps très court qui est alloué pour intervenir sur le substrat après la fin du traitement de surface pour que celui-ci soit efficace. Si ce délai de seize heures est dépassé, il n'est pas certain de garantir un bon collage de l'isolation, et cela surtout à basses températures. Il est donc indispensable de munir la surface externe traitée pour être isolée d'un revêtement d'accrochage qui doit assurer, d'une part, l'adhérence de l'isolation et, d'autre part, prolonger la durée de vie de la préparation de cette surface avant de la protéger.

Enfin, l'application d'un primaire peut dans la plupart des cas protéger le substrat métallique contre la corrosion. Cependant, ce primaire de collage n'a pas cette vocation par le fait que celui-ci est poreux à l'eau. Cette eau, en contact prolongé avec le métal, peut engendrer de la corrosion due principalement à l'action de l'oxygène (oxydation). En contrepartie, il est très difficile de faire adhérer un primaire aux températures proches de 20 K, par l'ajout d'un agent anticorrosion dans sa composition, qui dégrade en contrepartie son adhérence à basses températures. C'est pour cette raison principale que ce primaire a été qualifié et ceci en prenant en compte l'hypothèse que le matériel, en cours de fabrication n'est pas soumis à ce type d'agression et ce jusqu'à la pose de l'isolation. De plus, après la pose de l'adhésif, le métal est protégé contre toutes agressions en agissant comme un revêtement anticorrosion.

Cependant, conformément aux directives européennes, certains composés organiques volatiles classifiés par certaines phases de risque doivent être remplacés, et ce primaire devint obsolète par la présence, dans sa formulation, d'éther-monoéthylique de l'éthylèneglycol.

Le remplacement de l'éther-monoéthylique de l'éthylèneglycol dans la formule du primaire demande autant de recherche et d'essais de validation, qu'une qualification pour un nouveau primaire, sans pour autant aboutir. C'est dans cet esprit, que plusieurs primaires ont été testés sans donner de bons résultats en essais de traction à la température de 20 K.

Par obligation, de longues recherches ont aboutis sur une modification de la formule existante en remplaçant l'éther-monoéthylique de l'éthylèneglycol. Ce but est atteint par la présente invention qui propose l'utilisation d'un composant en tant que cosolvant indispensable pour réaliser un revêtement d'accrochage apte à résister à des températures cryogéniques et un primaire obtenu à partir de cette composition.

**EXPOSÉ DE L'INVENTION**

L'invention a pour objet l'utilisation d'une composition filmogène, comprenant au moins un solvant et un cosolvant pour conférer après évaporation au produit réactif, obtenu par application et séchage de ladite composition sur un support, une aptitude de forte adhérence jusqu'à des températures cryogéniques. Plus précisément, le produit réactif obtenu peut être utilisé jusqu'à une température de 4 K (hélium liquide), température permettant de dégager des marges par rapport au 20 K (hydrogène liquide).

Conformément à l'invention, le cosolvant ne peut pas être n'importe quel solvant classiquement utilisé dans les primaires d'accrochage. En effet, le fait de supprimer ou d'introduire n'importe quel cosolvant, dans la formule du primaire, a pour conséquence de supprimer le but recherché, c'est-à-dire plus précisément, l'adhérence du produit sur le substrat ou selon le choix du cosolvant l'adhérence de l'adhésif sur le primaire et principalement quand le primaire est soumis à de basses températures.

Comme précédemment indiqué, l'adhérence de l'adhésif à l'interface du substrat est améliorée après l'application d'un primaire d'accrochage. En outre, la principale raison est liée à la différence des caractéristiques rhéologiques entre le primaire et l'adhésif. Le primaire, étant beaucoup moins visqueux que la colle, mouille parfaitement la surface du subjectile préalablement traitée. Cela est d'autant plus vrai, si dans la formule du primaire d'accrochage, selon l'invention, le cosolvant a pour effet d'abaisser la tension superficielle du revêtement lors de son application.

L'invention a donc pour objet l'utilisation d'une composition comprenant un liant en solution dans un solvant et un cosolvant, pour fournir, après application et séchage, un primaire d'accrochage résistant à des températures cryogéniques, le cosolvant ayant pour effet d'abaisser la tension superficielle du primaire d'accrochage lors de son application.

Le solvant peut être du xylène et le cosolvant du 1-méthoxy-2-propanol.

Pour des raisons de commodité, la fabrication du primaire selon l'invention peut être obtenue dans un premier temps en fabricant une base et un durcisseur, qui peuvent être ainsi conservés séparément dans des conditions de stockage classiques pour une durée d'utilisation d'un an au minimum, puis dans un deuxième temps en les mélangeant dans de bonnes proportions à l'aide d'un diluant. Quoi qu'il en soit, les proportions respectives du solvant et du cosolvant que l'on inclut dans la formule sont choisies de sorte que leur effet de dilution avant de s'évaporer ne dégrade pas les composants résiduels de la chaîne réactive du primaire obtenue après sa polymérisation.

Le liant peut être une résine époxyde à deux composants constitués par une base époxyde et un durcisseur. Le durcisseur peut comprendre un polyaminoamide. La base époxyde peut être constituée par une résine époxyde en solution dans le solvant (par exemple du xylène) et le cosolvant (par exemple du 1-méthoxy-2-propanol). Le durcisseur peut être en solution dans ledit solvant (par exemple du xylène) et ledit cosolvant (par exemple du 1-méthoxy-2-propanol).

La composition selon l'invention peut être diluée, notamment dans du toluène.

**EXPOSÉ DÉTAILLÉ DE MODES DE RÉALISATION PARTICULIERS**

Comme il a été dit plus haut, le liant peut être une résine époxyde à deux composants constitués par une base époxyde et un durcisseur.

La base peut être obtenue à partir d'une résine époxyde de chez HUNTSMAN référencée Araldite PZ 820-1, d'un solvant (Xylène distribué par VWR PROLABO) utilisé pour exercer un effet réducteur de la viscosité de la résine, et d'un cosolvant (Dowanol PM (1-méthoxy-2-propanol) distribué par UNIVAR) qui à pour rôle d'abaisser la tension superficielle du primaire lors de son application.

Fabrication de la base :

- Résine Araldite PZ 820-1 = 67,15 parties pondérales
- Dowanol PM = 12,70 parties pondérales
- Xylène = 20,15 parties pondérales

Le durcisseur peut être obtenu à partir d'un durcisseur polyaminoamide modifié de chez HUNTSMAN référencée Aradur CH 820, d'un solvant (Xylène distribué par VWR PROLABO) utilisé pour exercer un effet réducteur de la viscosité du durcisseur, et d'un cosolvant (Dowanol PM (1-méthoxy-2-propanol) distribué par UNIVAR) qui a pour rôle d'abaisser la tension superficielle du primaire lors de son application.

Fabrication du durcisseur :

- Durcisseur Aradur CH 820 = 67,15 parties pondérales
- Dowanol PM = 12,70 parties pondérales
- Xylène =20,15 parties pondérales

La fabrication du primaire peut être réalisée en mélangeant 100 parts de base et 70 parts de durcisseur et en ajoutant 70 parts de diluant afin d'obtenir une viscosité comprise entre 17 et 23 secondes à l'aide d'une coupe AFNOR n°4. Ainsi, la durée de vie en pot du mélange est de 8 heures avec des conditions climatiques de température à 20°C $\pm$ 2°C et d'hygrométrie inférieure à 60 %.

Fabrication du primaire :

- BASE : (100 parts)
- DURCISSEUR : (70 parts)
- DILUANT (Toluène) : (70 parts)

Ce primaire selon l'invention peut s'appliquer en général en une seule couche de quelques micromètres d'épaisseur sur le substrat à peindre en donnant un feuil de primaire humide d'une épaisseur avantageusement comprise entre 15 et 80 $\mu$m ce qui, d'une part, favorise l'adhérence de ce revêtement sur son subjectile même quand il est soumis à basses températures et, d'autre part, permet de limiter au maximum le poids de ce revêtement, ce qui est extrêmement appréciable pour les applications spatiales ou aéronautiques. L'application de la couche de primaire, préparée selon l'invention, peut s'appliquer sur le substrat au pistolet à peinture, à la brosse ou par tout autre technique connue tant que le dépôt du film sec n'excède pas au maximum une épaisseur de film sec de 50 $\mu$m. Ainsi, lorsque la composition est destinée à être appliquée le plus régulièrement possible sur la surface externe des lanceurs spatiaux, elle comprend avantageusement au moins un colorant, comme du rouge de méthyle, en quantité appropriée pour le rendre visible lors de son application.

Cette application est, de préférence, réalisée à température ambiante et sous une hygrométrie relative inférieure à 60%, ainsi que sa polymérisation qui est de l'ordre de 40 heures, ces conditions conduisent à une optimisation des propriétés mécaniques du revêtement résultant.

Pour tester l'efficacité de la formule du primaire, à basses températures, des essais de cisaillement ont été réalisés à l'aide d'éprouvettes métal/métal conformes aux normes AFNOR NF-T-76-107 (détermination de la résistance au cisaillement d'assemblages réalisés avec des adhésifs structuraux à recouvrement simple) et NF-T-76-130 (désignation des principaux faciès de rupture), ainsi que des procédures utilisées en interne ayant fait l'objet de plusieurs validations avant être qualifiées conformément aux normes qualités.

Dans le cadre de ces essais, les éprouvettes ont été réalisées en alliage d'aluminium 2219 et 6061, matières fréquemment utilisées dans le domaine spatiale et aéronautique. La préparation de surface des échantillons, avant d'être recouverts de primaire sur les zones à coller, a été réalisée en effectuant un dégraissage, à l'aide d'un bain alcalin, suivi d'un décapage sulfochromique. Les peignes de cisaillement ont été collés avec une colle apte à supporter les températures cryogéniques sans perdre son intégrité. De préférence, le matériaux adhésif est une colle de la famille des époxydes, compatible avec le primaire, comme celle qui a servi à fabriquer les éprouvettes de cisaillement, disponible sous la référence AY103/HY953F auprès de la société VANTICO, et plus connue sous la dénomination « ARALDITE » (marque déposée).

Il convient de noter que, les essais ne sont pas effectués avant une dizaine de jours de polymérisation, temps nécessaire pour obtenir une bonne maturation du joint de colle, sous une température de 23 °C $\pm$ 2°C et une humidité relative comprise entre 45 et 75 %.

Les résultats des essais sont calculés de la façon suivante :

$$R = P/LW$$

Avec R : résistance au cisaillement (MPa)
P : force de rupture, en Newton

L : longueur de recouvrement, en mm

W : largeur de recouvrement, en mm

Ainsi après vérification, le primaire ainsi formulé offre une meilleure tenue en froid du joint de colle (la rupture cohésive à 20 K, donne une valeur moyenne de 15 MPa) qu'en température ambiante (la rupture cohésive à 300 K donne une valeur moyenne de 10 MPa), et donc une résistance très satisfaisante aux contractions thermiques et aux dilatations sous pression qui lui confère un intérêt tout particulier dans le domaine cryotechnique.

A titre exemple, illustratif et non limitatif, on a réalisé un primaire d'accrochage conforme à l'invention, utilisé dans le cadre de l'isolation d'une tuyauterie cryotechnique obtenue avec de la mousse rigide à cellules fermées en polychlorure de vinyle, en opérant comme suit.

On a préparé tout d'abord la tuyauterie, à l'aide d'un traitement de surface, de manière à accroître considérablement l'adhérence du primaire d'accrochage à appliquer sur cette surface à protéger. Ce traitement préalable est constitué d'un dégraissage alcalin, de façon à éliminer complètement l'huile, la graisse, la poussière et les autres impuretés résiduelles de la surface de collage, puis d'un décapage chimique modifiant la surface du substrat par l'ajout de groupements réactifs et la formation de cavités pénétrantes qui permettent un ancrage mécanique du primaire d'accrochage. Les effets de ce traitement de surface varient selon les substrats. En ce qui concerne cet exemple, le substrat, en alliage d'aluminium 2219, est dégraissé pendant 15 minutes dans un bain alcalin monté avec de l'eau déminéralisée portée à une température de 60°C et concentrée à 20 g/l de D520 de chez Heinkel, puis décapé pendant 20 minutes, avant d'être rincé toujours avec de l'eau déminéralisée, dans un bain sulfochromique monté également avec de l'eau déminéralisée chauffée à 60°C, mais concentrée à 130 g/l de D514 de chez Heinkel.

Après cette étape, il est souhaitable que la surface à protéger soit recouverte du primaire d'accrochage aussi vite que possible pour réduire au maximum les risques que peuvent occasionner d'éventuelles pollutions. Raisonnablement, cette durée est sensiblement inférieure à 8 heures.

Le primaire, de densité proche de 1 et de vie en pot (ou « pot-life ») d'environ 8 heures à température ambiante (18-24°C) et sous hygrométrie relative inférieure à 60°C, est donc appliqué sur le substrat à isoler. Pour ce faire, sur cet exemple, on l'applique sur la tuyauterie par pulvérisation et sous atmosphère contrôlée (20°C, hygrométrie relative <60%). L'épaisseur du film sec, après 36 heures de polymérisation à température ambiante du primaire d'accrochage, déposée sur la tuyauterie est avantageusement comprise entre 10 et 50 $\mu$m et de préférence proche de 20 $\mu$m.

La tuyauterie peut passer à l'étape d'isolation, qui consiste à coller la mousse à cellules fermées en polychlorure de vinyle avec un adhésif approprié, c'est-à-dire apte à supporter les températures cryogéniques sans perdre son intégrité, et doit, en outre, être chimiquement compatible avec les matériaux dont il assure le collage. De préférence, le matériau adhésif est une colle de la famille des époxydes, comme par exemple de la colle disponible sous la référence AY103/HY953F auprès de la société VANTICO, et plus connue sous la domination «ARALDITE » (marque déposée).

Dans cette application citée à titre exemple, illustratif et non limitatif, des éprouvettes de cisaillement on été réalisées en parallèle afin de démontrer par des tests d'adhérence l'efficacité du produit à basses températures, notamment à l'environnement de l'hydrogène liquide simulé avec de l'hélium liquide.

En outre, certaines éprouvettes ont subi, avant d'être testées, des épreuves de vieillissement accéléré représentatives de la durée de vie de l'équipement. Cette épreuve de vieillissement accéléré consiste, à l'aide d'une étuve climatique dédiée à cet effet, à réaliser un cycle de vieillissement six fois de suite sans interruption. Ce cycle de vieillissement accéléré, qui dure un peu plus de 4 jours, consiste à placer les échantillons dans l'étuve programmée de façon à obtenir 70°C à 65% d'hygrométrie pendant 53 heures puis -20°C pendant 4 heures et enfin 70°C à 90% d'hygrométrie pendant 45 heures, le tout avec une vitesse de transition de 1°C/minute. De plus, à la fin de cette épreuve de vieillissement accéléré, les échantillons sont trempés pendant 10 minutes dans l'azote liquide puis ramenés à température ambiante, et ceci seize fois de suite, afin de simuler plusieurs chocs thermiques à basse température.

Quelques résultats, avec éprouvettes vieillies, sont présentés dans le tableau ci-après.

| Eprouvette No. | Epaisseur moyenne de primaire ($\mu$m) | Température d'essai (K) | Surface collée (mm$^2$) | Contrainte à Rupture (MPa) | Faciès de rupture |
|---|---|---|---|---|---|
| 1 | 15 à 20 | 293 | 337,14 | 10,29 | Cohésive du joint de colle |
| 2 | 15 à 20 | 293 | 325,75 | 9,75 | Cohésive du joint de colle |
| 3 | 15 à 20 | 77 | 328,62 | 14,26 | Cohésive du joint de colle |
| 4 | 15 à 20 | 77 | 326,02 | 14,55 | Cohésive du joint de colle |

(suite)

| Eprouvette No. | Epaisseur moyenne de primaire ($\mu$m) | Température d'essai (K) | Surface collée (mm$^2$) | Contrainte à Rupture (MPa) | Faciès de rupture |
|---|---|---|---|---|---|
| 5 | 15 à 20 | 20 | 325,75 | 15,75 | Cohésive du joint de colle |
| 6 | 15 à 20 | 20 | 325,75 | 16,15 | Cohésive du joint de colle |
| 7 | 15 à 20 | 4 | 325,75 | 17,09 | Cohésive du joint de colle |

Ce tableau montre que le primaire obtenu à partir du cosolvant conforme à l'invention présente, même lorsqu'il est porté à des températures inférieures à 20 K, une bonne adhérence contrairement à beaucoup de primaires existant actuellement. De plus, aucune détérioration de ce primaire d'accrochage n'a été notée à de telles températures, même après avoir fait subir aux échantillons plusieurs cycles de vieillissement accélérés en étuve climatique suivis de plusieurs chocs thermiques à l'azote liquide (77K).

**Revendications**

1. Utilisation d'une composition comprenant un liant en solution dans un solvant et un cosolvant, pour fournir, après application et séchage, un primaire d'accrochage résistant à des températures cryogéniques, le cosolvant ayant pour effet d'abaisser la tension superficielle du primaire d'accrochage lors de son application.

2. Utilisation selon la revendication 1, **caractérisée en ce que** le solvant est du xylène et le cosolvant est du 1-méthoxy-2-propanol.

3. Utilisation selon la revendication 1, **caractérisée en ce que** le liant est une résine époxyde à deux composants constitués par une base époxyde et un durcisseur.

4. Utilisation selon la revendication 3, **caractérisée en ce que** le durcisseur comprend un polyaminoamide.

5. Utilisation selon l'une des revendications 3 ou 4, **caractérisée en ce que** la base époxyde est constituée par une résine époxyde en solution dans le solvant et le cosolvant.

6. Utilisation selon la revendication 5, **caractérisée en ce que** le solvant est du xylène et le cosolvant est du 1-méthoxy-2-propanol.

7. Utilisation selon l'une quelconque des revendications 3 à 5, **caractérisée en ce que** le durcisseur est en solution dans ledit solvant et ledit cosolvant.

8. Utilisation selon la revendication 7, **caractérisée en ce que** le solvant est du xylène et le cosolvant est du 1-méthoxy-2-propanol.

9. Utilisation selon l'une quelconque des revendications 1 à 8, **caractérisée en ce qu'**elle est diluée avec du toluène.

Office européen
des brevets

**RAPPORT DE RECHERCHE EUROPEENNE**

Numéro de la demande

EP 07 11 1371

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 03/093379 A (VALSPAR SOURCING) 13 novembre 2003 (2003-11-13) * page 6, ligne 3 - page 7, ligne 12; revendications 1,23-25; exemple 2 * ----- | 1-3,5-8 | INV. F16L59/02 B64G1/40 F17C13/00 C09J163/00 C09J5/02 |
| X | KR 2004 065 936 A (KUNSUL CHEMICAL) 23 juillet 2004 (2004-07-23) * abrégé * ----- | 1-3,5-8 | |
| A | FR 2 876 438 A (CRYOSPACE L'AIR LIQUIDE AEROSPATIALE) 14 avril 2006 (2006-04-14) * page 5, ligne 14 - ligne 18 * * page 9, ligne 10 - page 11, ligne 23; revendications 1,10-16 * ----- | 1-9 | |
| A | EP 1 124 088 A (CRYOSPACE L'AIR LIQUIDE AEROSPATIALE) 16 août 2001 (2001-08-16) * alinéa [0017] - alinéa [0029]; revendications 1-3 * ----- | 1-9 | DOMAINES TECHNIQUES RECHERCHES (IPC) F16L F17C C09J |

Le présent rapport a été établi pour toutes les revendications

| Lieu de la recherche | Date d'achèvement de la recherche | Examinateur |
|---|---|---|
| La Haye | 7 août 2007 | Bourgonje, Andreas |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 11 1371

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2007

| Document brevet cité au rapport de recherche | | Date de publication | Membre(s) de la famille de brevet(s) | | Date de publication |
|---|---|---|---|---|---|
| WO 03093379 | A | 13-11-2003 | AU | 2003225286 A1 | 17-11-2003 |
| | | | BR | 0309739 A | 22-02-2005 |
| | | | CA | 2484347 A1 | 13-11-2003 |
| | | | CN | 1753959 A | 29-03-2006 |
| | | | EP | 1507830 A1 | 23-02-2005 |
| | | | JP | 2006514122 T | 27-04-2006 |
| | | | MX | PA04010918 A | 14-02-2005 |
| KR 2004065936 | A | | AUCUN | | |
| FR 2876438 | A | 14-04-2006 | AUCUN | | |
| EP 1124088 | A | 16-08-2001 | FR | 2805023 A1 | 17-08-2001 |

EPO FORM P0460

Pour tout renseignement concernant cette annexe : voir Journal Officiel de l'Office européen des brevets, No.12/82